# EUROPEAN PATENT APPLICATION

(11) **EP 2 796 784 A1**
(43) Date of publication of application: **29.10.2014**
(21) Application number: 14000101.7
(22) Date of filing: 13.01.2014
(51) Int. Cl.: F21V 29/00, F21K 99/00, F21V 3/00, F21V 14/06, F21V 8/00, F21Y 101/02

(54) **Bulb structure and light guide lamp cover thereof**

(30) Priority: 24.04.2013 TW 102114604
(71) Applicant: Lite-On Technology Corporation, Neihu, Taipei 114 (TW)
(72) Inventor: Ku-Yuan, Huang, 300 Hsinchu (TW)
(74) Representative: Schmidt, Steffen J.

(57) **Abstract**

A bulb structure (100) and a light guide lamp cover (101, 201) thereof are provided. The bulb structure (100) comprises a light source (110, 210) and a lamp body (111). The light source (110, 210) includes a circuit board (112) and a plurality of light emitting elements (114) disposed on the circuit board (112). The lamp body (111) includes a light guide lamp cover (101, 201) disposed above the light source (110, 210). The light guide lamp cover (101, 201) includes a light guide element (120, 220) and a holder (130, 230). The light guide element (101, 201) covers a peripheral surface (131) of the holder (130). The light guide element (120, 220) is moveably connected onto the holder (130, 230) through a fastening element (135, 235) and can move relative to the holder (130, 235).

## Description

### BACKGROUND OF THE INVENTION

### Field of the Invention

The invention relates in general to a bulb structure, and more particularly to a bulb structure having a light guide lamp cover.

### Description of the Related Art

Due to the features of power saving and high luminance, LED bulb has become more and more popular. Since the LED bulb has a complicated structure and a time-consuming assembly process, the manufacturing cost is high and is hard to drive it down. Furthermore, the heat dissipating base (that is, the lamp base) normally adopts unibody design and is formed by metal (such as aluminum), therefore the shaping and manufacturing of the lamp become even more difficult and incur higher manufacturing costs. Also, the components of the bulb structure are too complicated, and overall heat dissipation effect still has much room for improvement.

Therefore, it has become a prominent task for the lighting industries to provide components which are easy to shape, convenient to assemble and have excellent heat dissipation so as to drive down the manufacturing cost of the bulb structure.

### SUMMARY OF THE INVENTION

The invention is directed to a bulb structure having a light guide lamp cover, wherein the light guide element can be easily assembled through the buckling design between the holder and the light guide element.

The invention is also directed to a bulb structure having a light guide lamp cover. The emitting color of the bulb structure is changed by adjusting the light guide element through the buckling design between the light guide element and the holder, and the disposition of the color-change layer.

According to one embodiment of the present invention, a bulb structure including a light source and a lamp body is provided. The light source includes a circuit board and a plurality of light emitting elements disposed on the circuit board. The lamp body includes a light guide lamp cover disposed above the light source. The light guide lamp cover includes a light guide element and a holder. The light guide element covers a peripheral surface of the holder. The light guide element is moveably connected onto the holder through a fastening element and can move relative to the holder.

According to another embodiment of the present invention, a light guide lamp cover including a light guide element and a holder is provided. The light guide element covers a peripheral surface of the holder. The light guide element is buckled onto the holder through a fastening element and can move relative to the holder.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIGS. 1A and 1B are explosion diagrams of a bulb structure and a light guide lamp cover thereof according to an embodiment of the invention.
FIG. 2 is a cross-sectional view of a bulb structure according to an embodiment of the invention.
FIG. 3 is an explosion diagram of a light guide lamp cover according to another embodiment of the invention.

### DETAILED DESCRIPTION OF THE INVENTION

The bulb structure of the present embodiment has a light guide lamp cover. The light guide lamp cover is disposed above the light source, and includes a light guide element and a holder. In the present embodiment, the light guide element is buckled onto the holder through a fastening element, hence reducing assembly cost. In addition, the light is reflected by a peripheral surface of the holder and is guided by the light guide element, hence increasing reflection efficiency and reducing light loss. Besides, through the design of the fastening element, the light guide element can move, especially rotate, relative to the holder.

The bulb structure of the present embodiment can be used in a color-change light emitting system. Color-change function can be achieved by adjusting the light guide element for changing relative position between the light emitting material layer and the light emitting elements. Also, the lamp body has a heat sink and an insulating base which are disposed under the light source. Heated air around the insulating base and the heat sink can pass through the top opening of the holder to dissipate the heat generated by the light source by way of thermal convection.

A number of embodiments are disclosed below for elaborating the invention. However, the embodiments of the invention are for detailed descriptions only, not for limiting the scope of protection of the invention.

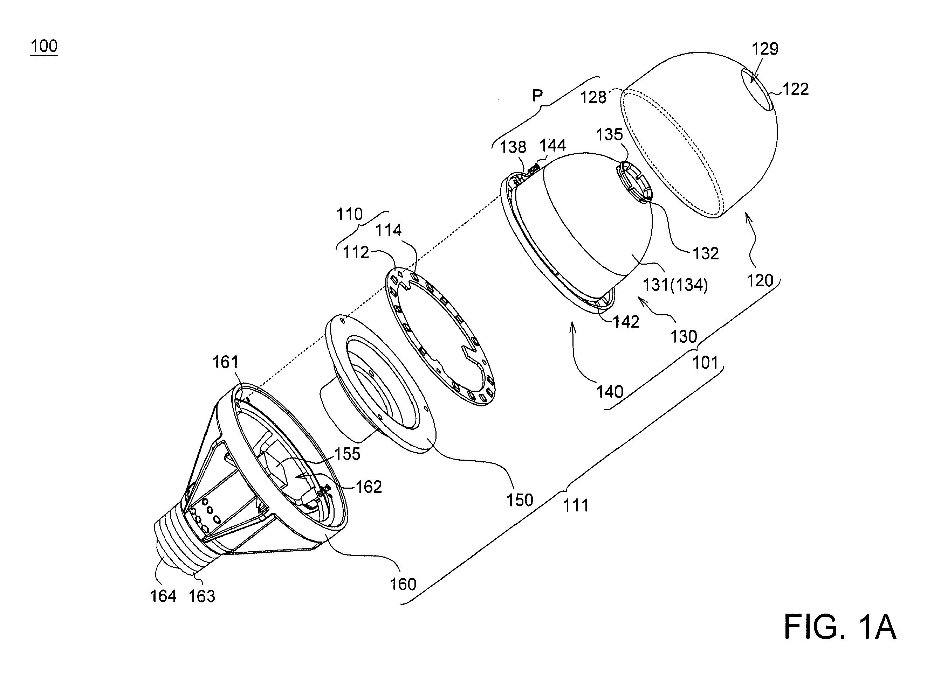

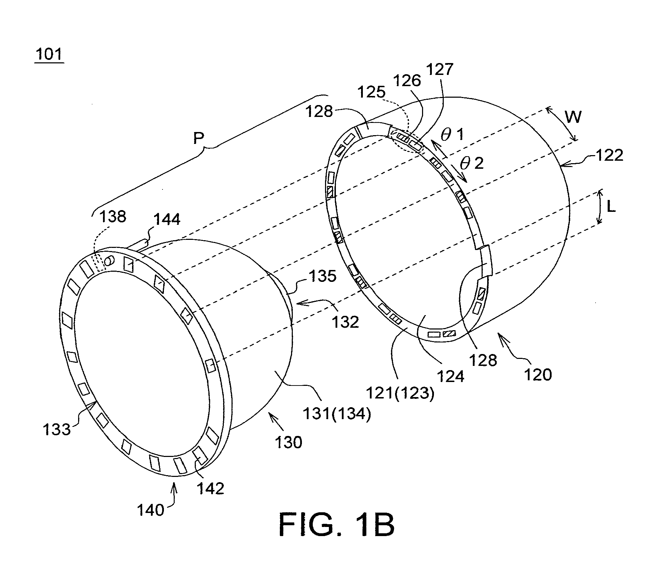

Referring to FIGS. 1A and 1B, explosion diagrams of a bulb structure 100 and a light guide lamp cover 101 thereof according to an embodiment of the invention are shown. The bulb structure 100 includes a light source 110 and a lamp body 111. The light source 110 is disposed in the lamp body 111, and includes a circuit board 112 and a plurality of light emitting elements 114 disposed on the circuit board 112. The light emitting elements 114, for example, are LED elements. The lamp body 111 includes a light guide lamp cover 101, a heat sink 150, a powder controller 155 and an insulating base 160 in a top down order.

The light guide lamp cover 101 is disposed above the light source 110, and includes a light guide element 120 and a holder 130. The light guide element 120 is based on a hollowed design and formed by a transparent light guide material (such as acrylic), and covers a peripheral surface 131 of the holder 130. Besides, the top 122 of the light guide element 120 has a first opening portion 129, the top 132 of the holder 130 has a fastening element 135 corresponding to the first opening portion 129, and the bottom 121 of the light guide element 120 is an incident surface 123 for receiving the light emitted from the light emitting elements 114.

In addition, the holder 130 is a non-transparent hollowed body, preferably, a semi-circular hollowed body for shielding internal structure of the bulb structure 100 and making the appearance of the bulb structure 100 tidier and simpler. The peripheral surface 131 of the holder 130 is a smooth curvature or a mirror surface facing towards the inner surface 124 of the light guide element 120. The peripheral surface 131 of the holder 130 can be used as a reflective surface 134 for reflecting light into the light guide element 120. Thus, the incident light coming from the bottom 121 (light incident surface 123) of the light guide element 120 can be emitted outward through the guidance of the light guide element 120 and/or the reflective surface 134. Preferably, the inner surface 124 of the light guide element 120 tightly contacts the peripheral surface 131 of the holder 130, so that reflection efficiency of the light is increased, light loss is reduced, and the quantity of light emitting elements 114 can thus be reduced.

Moreover, an annular plate 140 is disposed on the bottom of the holder 130. The annular plate 140 has several holes 142 corresponding to the light emitting elements 114 for exposing corresponding light emitting elements 114, so that the light emitting elements 114 face towards the bottom 121 of the light guide element 120 for allowing the light to enter the light guide element 120 from the bottom 121 (the incident surface 123) of the light guide element 120.

To make the light guide element 120 capable of moving relative to the holder 130, the fastening element 135 disposed on the top 132 of the holder 130 is engaged with the first opening portion 129 disposed on the top 122 of the light guide element 120 to fix the light guide element 120. The light guide element 120 can rotate relative to the holder 130 around a center of the fastening element 135. To equip the bulb structure 100 with color-change function, the bottom 121 of the light guide element 120 (the incident surface 123) has a color-change layer 125 thereon for changing the wavelength of the light entering the incident surface 123 from the light emitting elements 114. The color-change layer 125 can be a material layer, which is made of a photo-sensitive color-change ink or a fluorescent powder etc. In an embodiment, the color-change layer 125 includes a plurality of first material layers 126 and second material layers 127 periodically arranged on the incident surface 123.

When the light guide element 120 is adjusted to rotate relative to the holder 130, the relative position between the color-change layer 125 and the light emitting elements 114 (or, the holes 142) is changed to achieve color-change function. For example, referring to FIG. 1B, when the emitting color of the bulb structure 100 is radiated by a normal color light (such as a first color light), the light emitting elements 114 are positioned on a place correspondingly between the first material layer 126 and the second material layer 127. Thus, the emitting light of the light emitting elements 114 can directly enter the light guide element 120 via the bottom 121 of the light guide element 120 (the incident surface 123) for enabling the bulb structure 100 to emit the first color light.

In the present embodiment, when the light guide element 120 is rotated for moving the color-change layer 125 relative to the light emitting elements 114 (such as clockwise rotation) by a first angle θ1, the first material layers 126 will respectively be aligned with the light emitting elements 114 (or the holes 142). By doing so, the emitting light of the light emitting elements 114 will pass through the first material layer 126 at first, so that the wavelength of the emitting light of the light emitting elements 114 will be changed as a second color light and then enter the light guide element 120 for enabling the bulb structure 100 to emit the second color light.

In the present embodiment, when the light guide element 120 is rotated for moving the color-change layer 125 relative to the light emitting elements 114 (such as anti-clockwise rotation) by a second angle θ2, the second material layers 127 will respectively be aligned with the light emitting elements 114 (or the holes 142). By doing so, the emitting light of the light emitting elements 114 will pass through the second material layer 127 at first, so that the wavelength of the emitting light of the light emitting elements 114 will be changed as a third color light and then enter the light guide element 120 for enabling the bulb structure 100 to emit the third color light.

According to an embodiment, the design of collaborating different material layers of the color-change layer with the movement of the light guide element enables the light emitting elements 114 to generate lights with different colors in response to said different material layers, so that the bulb structure 100 can emit lights with different colors.

In order to control the range of movement of the light guide element 120, the annular plate 140 and the bottom 121 of the light guide element 120 have several corresponding limiting structures P thereon. Each limiting structure P includes a recess 128 disposed on the bottom 121 of the light guide element 120 and a protruding portion 138 disposed on the annular plate 140, and the protruding portion 138 corresponds to the recess 128. In the present embodiment, the limiting structure P restricts the range of rotation of the light guide element 120 to be within the periodic change of the first material layers 126 and the second material layers 127. For example, the length L of the recess 128 is equal to a periodic width W of the first material layer 126 or the second luminescent material layer 127. When the light guide element 120 is rotated by a first angle θ1, one side of the recess 128 contacts the protruding portion 138 and stops there. When the light guide element 120 is rotated by a second angle θ2, the other side of the recess 128 contacts the protruding portion 138 and stops there. However, above embodiments are for exemplification only, not for limiting the color and arrangement cycle of the material layers or the direction and range of movement or rotation of the light guide element, and any combination would do as long as desired color change or color gradation effect can be generated.

In the present embodiment, the heat sink 150 and the insulating base 160 are disposed under the circuit board 112. The heat sink 150 can be formed by aluminum or a material with high thermal conductivity. The insulating base 160 can be a plastic member. The heat sink 150 contacts the circuit board 112. The heat sink 150 and the circuit board 112 are received in a containing space 162 of the insulating base 160. The bottom of the insulating base 160 has a pair of conductive connectors 163 and 164 for receiving external power, and a powder controller 155 further converts the voltage of the external power into a drive voltage of the circuit board 112 for driving the light emitting elements 114. The heat generated by each light emitting element 114 when the light emitting element 114 emits a light can be absorbed by the heat sink 150 which accordingly dissipates the absorbed heat by way of thermal convention. For example, external air can enter the lamp body 111 via the insulating base 160 and then pass through the heat sink 150 to reach the top opening (that is, the second opening portion 139) of the holder 130 so as to dissipate the heat generated by the light source 110.

In the present embodiment, the lamp body 111 includes a fixing member 144 such as a screw or a fixing bolt. One terminal of the fixing member 144 is fixed on a fixing portion 161 of the insulating base 160 from top of the annular plate 140 and passes through the circuit board 112 and the heat sink 150 for combining the annular plate 140 and the circuit board 112 with the insulating base 160. Moreover, the holder 130 and the annular plate 140 are integrally formed in one piece or are fixedly combined through the fixing member. The integration design of the holder 130 and the annular plate 140 in one piece not only avoids light leakage but also helps to drive down assembly cost.

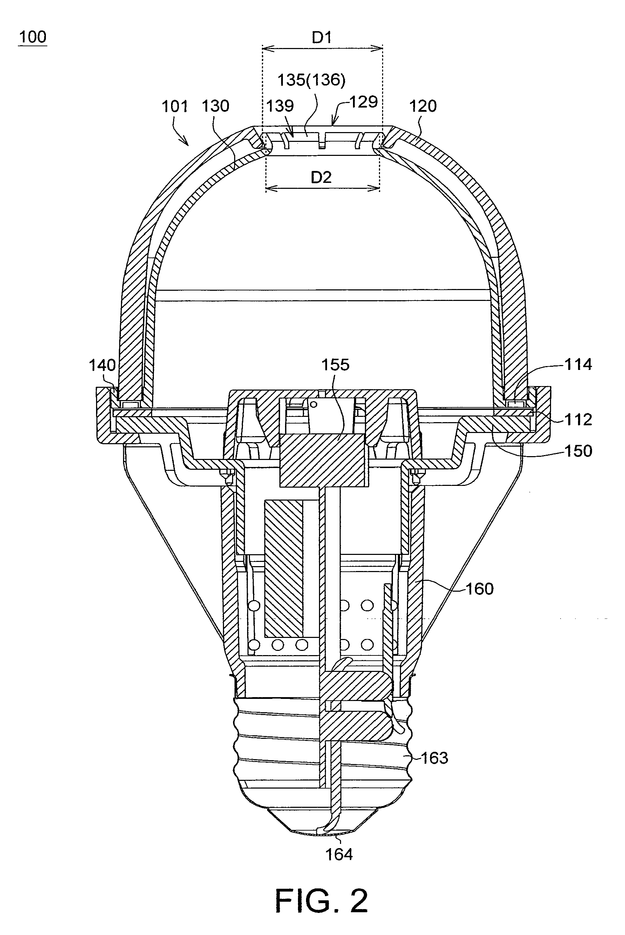

Referring to FIG. 2, a cross-sectional view of a bulb structure 100 according to an embodiment of the invention is shown. The top 122 of the light guide element 120 has a first opening portion 129. The light guide element 120 is connected to the holder 130 through the fastening element 135. The fastening element 135 has a second opening portion 139 corresponding to the first opening portion 129 whose diameter D1 is slightly larger than or equal to a diameter D2 of the second opening portion 139. The fastening element 135 is formed by petal-like structures 136 surrounding the second opening portion 139. When assembling the light guide element 120 to the holder 130, the fastening element 135 (the petal-like structures 136) is elastically squeezed by the first opening portion 129 for passing through the first opening portion 129, and then released to engage with the first opening portion 129. However, the invention is not limited thereto. In a non-illustrated embodiment, the fastening element 135 is a protruding portion shaped as mushroom, and the petal-like structures 136 is formed surround the first opening portion 129 of the light guide element 120. When assembling the light guide element 120 to the holder 130, the petal-like structures 136 is elastically extended by the push of the fastening element 135 for the fastening element 135 to pass through the first opening portion 129, and then the petal-like structures 136 is released to clamp the fastening element 135 in the first opening portion 129.

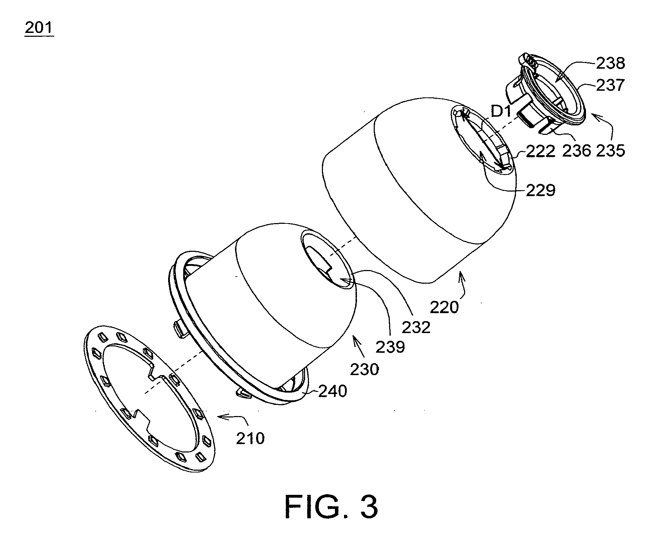

Referring to FIG. 3, an explosion diagram of a light guide lamp cover 201 according to another embodiment of the invention is shown. The present embodiment is different from the above embodiments in that the fastening element 235 can be detachably disposed on the top 232 of the holder 230 to buckle the light guide element 220 onto the holder 230. Detailed structures of the fastening element 235 are disclosed below, and other elements corresponding to the above embodiments are not repeated here.

In FIG. 3, the light guide lamp cover 201 is disposed above the light source 210, and includes a light guide element 220 and a holder 230. The top 222 of the light guide element 220 has a first opening portion 229, and the top 232 of the holder 230 has a second opening portion 239 corresponding to the first opening portion 229.

Besides, the fastening element 235 has a flange 237 and petal-like structures 236. The outer diameter of the flange 237 is larger than the diameter D1 of the first opening portion 229, and the petal-like structures 236 can be contracted inwardly when being squeezed by the first opening portion 229 and the second opening portion 239, and further passes through the first opening portion 229 and the second opening portion 239 so as to be engaged with the second opening portion 239. When the petal-like structures 236 are engaged with the second opening portion 239, the flange 237 leans on the peripheral of the first opening portion 229 to connect the light guide element 220 on the holder 230.

Through the buckling design disclosed above, the light guide element 220 is connected onto the holder 230 through the fastening element 235, and the light guide element 220 can move relative to the holder 230 around a center on the fastening element 235.

In addition, the fastening element 235 has a third opening portion 238 corresponding to the first opening portion 229 and the second opening portion 239 for dissipating the heat generated by the light source 210 by way of thermal convection.

According to the bulb structure disclosed in above embodiments of the invention, color-change function can be achieved by adjusting the light guide element for changing relative position between the material layers disposed on the light guide element and the light emitting elements. Thus, the bulb structure of the present embodiment can be used in a color-changeable light emitting system, hence further increasing product practicality.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A bulb structure, comprising:
a light source comprising a circuit board and a plurality of light emitting elements disposed on the circuit board; and
a lamp body comprising a light guide lamp cover, wherein the light guide lamp cover is disposed above the light source and comprises a light guide element and a holder, and the light guide element covers a peripheral surface of the holder,
wherein the light guide element is moveably connected onto the holder through a fastening element and moves relative to the holder.

2. The bulb structure according to claim 1, wherein the lamp body has a heat sink and an insulating base which are disposed under the circuit board and disposed in a containing space of the insulating base, and the heat sink contacts the circuit board.

3. The bulb structure according to claim 1, wherein an annular plate is disposed on the bottom of the holder, the lamp body further comprises a fixing member and an insulating base, and the fixing member passes through the annular plate and the circuit board respectively for combining the annular plate and the circuit board with the insulating base.

4. The bulb structure according to claim 1, wherein an annular plate is disposed on the bottom of the holder, the annular plate has a plurality of holes corresponding to the light emitting elements for exposing the light emitting elements, and the light emitting elements face towards the bottom of the light guide element.

5. The bulb structure according to claim 1, wherein the fastening element is formed by a plurality of petal-like structures.

6. The bulb structure according to claim 1, wherein the fastening element is disposed on the holder, and the light guide element has a first opening portion through which the fastening element passes to connect the light guide element onto the holder.

7. The bulb structure according to claim 1, wherein the light guide element has a first opening portion, the holder has a second opening portion corresponding to the first opening portion, and the fastening element is detachable and passes through the first opening portion and the second opening portion to connect the light guide element onto the holder.

8. The bulb structure according to claim 7, wherein the fastening element has a flange and a plurality of petal-like structures, and when the fastening element connects the light guide element onto the holder, the petal-like structures are engaged with the second opening portion and the flange leans on the first opening portion.

9. The bulb structure according to claim 1, wherein the bottom of the light guide element is an incident surface, which has a color-change layer for changing the wavelength of the light entering the incident surface from the light emitting elements.

10. The bulb structure according to claim 9, wherein the color-change layer comprises a plurality of material layers disposed on the incident surface, and, the relating position between the light emitting elements and the material layers are changed by moving the light guide element.

11. The bulb structure according to claim 1, wherein an annular plate is disposed on the bottom of the holder, and the annular plate and the bottom of the light guide element have a corresponding limiting structure for restricting the range of movement of the light guide element.

12. The bulb structure according to claim 1, wherein the peripheral surface of the holder is a smooth curvature, which faces towards an inner surface of the light guide element and is used as a reflective surface for reflecting light to enter into the light guide element.
